# EUROPÄISCHE PATENTSCHRIFT

(11) **EP 3 391 987 B1**
(45) Veröffentlichungstag und Bekanntmachung des Hinweises auf die Patenterteilung: **23.08.2023**
(21) Anmeldenummer: 18162930.4
(22) Anmeldetag: 20.03.2018
(51) Int. Cl.: B23K 11/00, B23K 11/11, B23K 37/04, B23K 37/047, B23K 26/22, B23Q 7/02, B23K 101/00, B23K 101/18

(54) **VERFAHREN ZUM VERSCHWEISSEN VON BLECHZUSCHNITTEN**
METHOD FOR WELDING SHEET METAL SECTIONS
PROCÉDÉ DE SOUDAGE DE PARTIES DE TÔLES DÉCOUPÉES

(30) Priorität: 31.03.2017 DE 102017106983
(43) Veröffentlichungstag der Anmeldung: 24.10.2018
(73) Patentinhaber: Benteler Automobiltechnik GmbH, 33102 Paderborn (DE)
(72) Erfinder: Base, Miroslav, 463 31 Chrastava (CZ); Jasansky, Ondrej, 46005 Liberec (CZ)
(74) Vertreter: Griepenstroh, Jörg

(56) Entgegenhaltungen:
- EP-A1- 0 987 080
- EP-A2- 1 147 974
- WO-A1-00/29168

## Beschreibung

Die Erfindung betrifft ein Verfahren zum Verschweißen von Blechzuschnitten zu Patchwork Blanks gemäß den Merkmalen in Patentanspruch 1.

Eine Tailored Blank ist eine Blechplatine, welche typischerweise aus verschiedenen Werkstoffgüten und Blechdicken zusammengesetzt ist. Ein derart vorgefertigtes Halbzeug kann anschließend beispielsweise durch Tiefziehen zu einem gewünschten Bauteil umgeformt werden. Tailored Blanks gibt es in der Form von Patchwork Blanks. Hierbei werden kleinere Bleche wie Flicken auf eine größere Platine mittels Widerstandspunktschweißen oder Laserstrahlschweißen aufgeschweißt oder mittels Strukturklebstoffen aufgeklebt.

Aus derartigen Patchworkblanks können zum Beispiel A-Säulen von Kraftfahrzeugen hergestellten werden. Erste Generationen von Anlagen zur Herstellung von Patchwork Blanks verwendet einen Handhabungsroboter, der beide miteinander zu verbindenden Blechzuschnitte separat aus Behältern greift, ihre jeweilige Position kalibriert und dann übereinander legt. Mit stabil stehenden Punktschweißelektroden, zum Beispiel einer Schweißpresse oder Schweißzange, wurden die Patches verschweißt. Das fertig geschweißte Platinenpaar wird mit demselben Roboter in einen Transportbehälter verlagert.

Eine Weiterentwicklung sieht zwei Handhabungsroboter vor. Die Blechzuschnitte werden separat aus den Behältern aufgenommen, hinsichtlich ihrer Position kalibriert und auf einem horizontalen Schweißtisch übereinander gelegt. Der Schweißtisch fixiert über Fixiermittel dieses Paar von Blechzuschnitten und ein oder zwei Roboter mit Schweißzangen schweißen diese Platinen zusammen. Das fertig geschweißte Platinenpaar wird anschließend von den Klemmvorrichtungen entspannt und der Handhabungsroboter greift das fertig geschweißte Platinenpaar, um es in einen Transportbehälter zu verlagern. Um die Handhabung und Schweißoperationen parallel ablaufen lassen zu können, ist bereits vorgeschlagen worden, zwei Schweißtische vorzusehen, die horizontal übereinander verschiebbar sind und die wechselhaft zwischen den Handhabungsrobotern zum Positionieren der Platinen und den Schweißrobotern pendeln.

Es hat sich jedoch gezeigt, dass die Schweißleistung bezogen auf die Produktionsfläche für eine solche Anlage steigerungsfähig ist. Hoher Platzbedarf besteht durch die horizontal verschiebbaren Tische. Zudem können maximal zwei Schweißroboter gleichzeitig an einer Platine arbeiten und das auch nur in Ausnahmefällen, wenn die Schweißpunkte weit genug voneinander entfernt sind. Zudem bedeutet eine Produktänderung, dass beide Tische umgerüstet werden müssen sowie auch die Roboterprogramme geändert werden müssen und selbstverständlich auch die Behälter, mittels welcher die Blechzuschnitte bereitgestellt werden, ausgetauscht werden müssen.

Die EP 1 147 974 A2 offenbart eine gattungsgemäße Vorrichtung und ein gattungsgemäßes Verfahren zum Bewegen eines Werkstücks entlang einer Montagelinie, wobei eine Vielzahl von Robotern auf einem drehbaren Tisch angeordnet sind, um zu bearbeitende Teile durch verschiedene Arbeitsstationen zu transportieren, die um den Umfang des Tisches angeordnet sind. Jeder Roboter kann ein Werkstück von einer Arbeitsstation zur nächsten transportieren. Die Drehung des Tisches bewegt den Roboter von einem Arbeitsplatz zum nächsten, während er ein zu bearbeitendes Teil trägt. Hierbei kann jeder Roboter ein Schweißgerät enthalten, um das Werkstück unabhängig von der Arbeitsstation oder während der Bewegung zwischen Arbeitsstationen zu bearbeiten.

Aus der EP 0 987 080 A1 ist eine Haltevorrichtung zum Festhalten von Werkstücken in Form von Metallblechplatinen bekannt. Die Metallblechplatinen bestehen aus magnetisierbarem Material. Die Haltevorrichtung weist magnetisch aktivierbare und deaktivierbare Auflageflächen zum Auflegen der miteinander zu verschweißenden Werkstücke auf.

Aus der WO 00/29168 A1 geht ein Verfahren und eine Vorrichtung zur Herstellung geschweißter Platinen aus mindestens zwei Blechabschnitten hervor. Hierbei werden die Abschnitte bzw. Platinen bei mindestens einem Bearbeitungsschritt in im Wesentlichen aufrechter Stellung bearbeitet.

Hiervon ausgehend liegt der Erfindung die Aufgabe zugrunde, ein Verfahren zum Verschweißen von Blechzuschnitten zu Patchwork Blanks weiter zu entwickeln, um die Schweißleistung bezogen auf die gleiche Produktionsfläche zu steigern.

Diese Aufgabe wird durch das Verfahren gemäß den Merkmalen des Patentanspruchs 1 gelöst.

Die Unteransprüche betreffen vorteilhafte Weiterbildungen der Erfindung.

Bei dem erfindungsgemäßen Verfahren zum Verschweißen von Blechzuschnitten zu Patchwork Blanks ist vorgesehen, dass die zu verschweißenden Blechzuschnitte zunächst bereitgestellt und nach der Bereitstellung mittels Handhabungsrobotern bewegt werden. Die Handhabungsroboter platzieren einen ersten Blechzuschnitt und wenigstens einen weiteren Blechzuschnitt in einer ausgerichteten Position auf dem ersten Blechzuschnitt. Der erste Handhabungsroboter platziert den ersten Blechzuschnitt auf einem Zentriertisch in einer Zentrierposition innerhalb der Schweißkabine. Der weitere Blechzuschnitt wird in ausgerichteter Position auf dem ersten Blechzuschnitt positioniert. Die Vorfixierung der Blechzuschnitte erfolgt ebenfalls auf dem Zentriertisch, d. h. in einer im Wesentlichen horizontalen Position. Dabei kann der erste Blechzuschnitt der kleinere Blechzuschnitt sein. Er kann zuerst auf dem Zentriertisch in seiner Lage kalibriert werden und danach gegriffen und in die gewünschte Schweißposition verlagert werden. Durch Punktschweißen wird der erste Blechzuschnitt mittels eines Schweißroboters mit dem zweiten Blechzuschnitt verbunden. Das dient der Vorfixierung der Blechzuschnitte.

Die vorfixierten Blechbauteile werden mittels eines Handhabungsroboters an ein Schweißkarussell übergeben und dort in im Wesentlichen vertikaler Position an einem Halter fixiert, der einen C-förmigen Rahmenaufbau aufweist und zur radial äußeren Seite des Schweißkarussells hin offen ist. In dieser vertikalen Position angekommen wird der Blechzuschnitt an dem Schweißkarussell klemmend fixiert. Nach der Lagefixierung führt das Schweißkarussell durch eine Drehbewegung die vorfixierten Blechbauteile an mehreren Schweißrobotern vorbei, um weitere Punktschweißungen auszuführen. Das können 2 bis 6, vorzugsweise vier Schweißpositionen sein. Abschließend erreicht das fertige Patchwork Blank eine Übergabeposition des Schweißkarussells, wo es von einem weiteren Handhabungsroboter entnommen wird und in einen Transportbehälter zur Weiterverarbeitung übergeben wird.

Ein wichtiger Arbeitsschritt der Erfindung ist, dass der Blechzuschnitt nach dem Vorfixieren von der im Wesentlichen horizontalen Position in eine vertikale Position verlagert wird, indem die vorfixierten Blechbauteile an das Schweißkarussell übergeben werden. Dadurch steht der Zentriertisch nach kürzester Zeit wieder zur Aufnahme weiterer Blechzuschnitte zur Verfügung, die wiederum mittels Punktschweißen vorfixiert werden können.

Das erfindungsgemäße Verfahren hat den erheblichen Vorteil, dass keine horizontale Verlagerung der Zentriertische erforderlich ist. Es ergeben sich aufgrund der gleichzeitigen Be- und Entladevorgänge des Schweißkarussells und der parallel dazu ausgeführten Schweißprozesse erhebliche Zeiteinsparungen, so dass bei gleicher Produktionsfläche von ca. 100 m² eine zwei- bis vierfach größere Schweißleistung erreicht werden kann. Die Schweißkapazität kann zum Beispiel durch den Einsatz von Doppelschweißzangen an den Schweißrobotern nochmals gesteigert werden und im Ergebnis die Fertigungskosten reduziert werden. Mit der Erfindung ist es möglich, sowohl die Hauptplatine als ersten Blechzuschnitt auf dem Zentriertisch zu positionieren und anschließend den zweiten Blechzuschnitt als Patch oberhalb des ersten Blechzuschnittes anzuordnen. Auch die umgekehrte Anordnung ist möglich, d. h. der Schweißtisch ist dazu ausgebildet, den kleineren Blechzuschnitt, d. h. das Patch, unten zu fixieren, wobei die größere Platine oben aufliegend mit dem Handhabungsroboter fixiert wird. Nun kann ein Schweißroboter zwei Schweißpunkte pro Patch setzen. Das so vorfixierte Paar von Blechzuschnitten wird mit dem Handhabungsroboter von dem Zentriertisch entnommen.

Die Blechzuschnitte werden auf dem Zentriertisch mittels Fixiermitteln fixiert, die die Blechzuschnitte entweder mechanisch mit flachen Backen klemmen oder einseitig magnetisch fixieren. An dem Halter des Schweißkarussels sind erfindungsgemäß mehrere universale Klemmvorrichtungen für flache Blechzuschnitte angeordnet, welche die Blechzuschnitte an einem Randbereich umgreift. Die Klemmvorrichtungen sind erfindungsgemäß an einem oberen Schenkel, an einem unteren Schenkel und an einem vertikalen Schenkel des Halters angeordnet Insbesondere ist der Halter dazu ausgebildet, unterschiedliche Blechzuschnitte aufzunehmen, so dass keine Umrüstung des Halters erforderlich ist.

Zum Einlegen des Blechzuschnittes ist es zweckmäßig, dass der Halter sich in diesem Moment nicht bewegt. Daher erfolgt die Bewegung des Schweißkarussells von einer Bearbeitungsstation zur nächsten Bearbeitungsstation vorzugsweise getaktet. Vorzugsweise wird das Schweißkarussell in 60° Schritte unterteilt und dementsprechend weiter bewegt. Bevorzugt gibt eine Beladestation und eine Entladestation und zwischen Be- und Entladestation vier weitere Schweißstationen mit jeweils einem Schweißroboter. Jeder Schweißroboter fertigt einen Teil der insgesamt anzufertigenden Schweißpunkte. Insgesamt erfolgt das Verschweißen von Blechzuschnitten wesentlich schneller, weil mehrere Schweißroboter gleichzeitig an einem einzelnen Blechzuschnitt arbeiten können. Die Schweißroboter behindern sich auch nicht gegenseitig. Die Anzahl der Schweißroboter ist vorzugsweise so gewählt, dass ein Gleichgewicht zwischen der Handhabungszeit zum Be- und Entladen und der Schweißzeit besteht. Zudem wird durch die vertikale Orientierung der Blechzuschnitte an dem Schweißkarussell viel Platz gespart. Die Erfindung eignet sich daher sehr gut für Bauteile mit vielen Schweißpunkten, wie es bei Patchworkblanks der Fall ist. An einer typischen A-Säule, die aus Patchworkblanks hergestellt wird, sind in der Regel 40 bis 110 Schweißpunkte vorgesehen.

Das erfindungsgemäße Verfahren wird nachfolgend anhand der in den Zeichnungen dargestellten Ausführungsbeispiele näher erläutert. Es zeigt:
- Figur 1: eine Schweißkabine zur Durchführung des Verfahrens in einer Draufsicht;
- Figur 2: die Schweißkabine der Figur 1 in einer perspektivischen Ansicht;
- Figur 3: einen Zentriertisch in einer ersten Ansicht;
- Figur 4: den Schweißtisch der Figur 3 in einer zweiten Ansicht;
- Figur 5: ein Schweißkarussell in einer perspektivischen Ansicht;
- Figur 6: einen Halter des Schweißkarussells mit einem ersten Patchwork Blank;
- Figur 7: den Halter der Figur 6 mit einem zweiten Patchwork Blank;
- Figur 8: den Halter der Figur 6 mit einem dritten Patchwork Blank und
- Figur 9: eine Klemmvorrichtung am Halter der Figur 6.

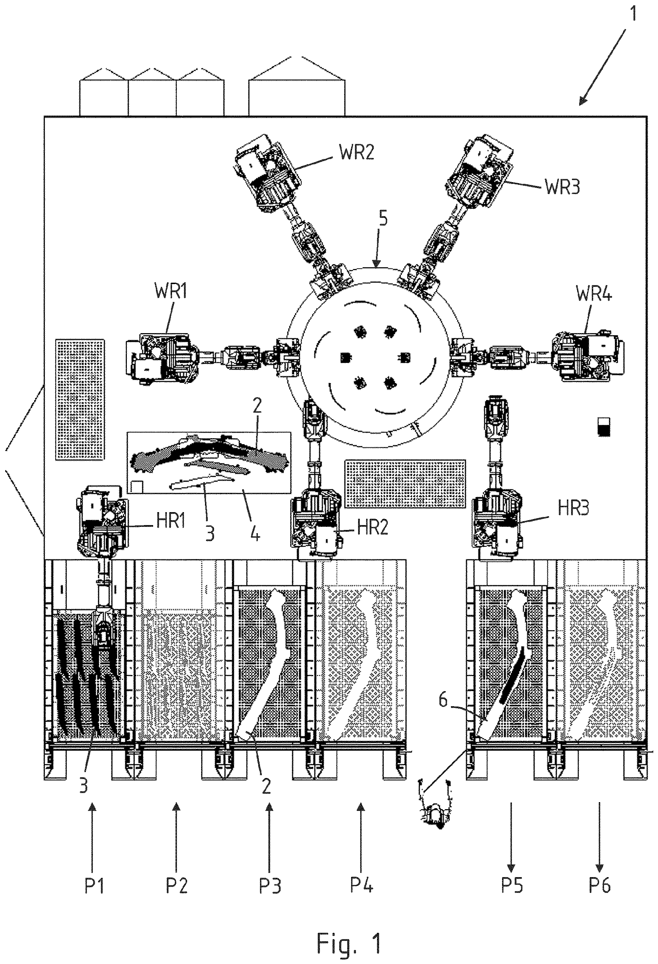

Figur 1 zeigt eine Schweißkabine 1, innerhalb derer das erfindungsgemäße Verfahren zur Herstellung von Patchwork Blanks aus Blechzuschnitten durchgeführt wird. Die Blechzuschnitte werden in der Darstellung der Figur 1 von unten zugeführt. Die Pfeile P1 und P2 verdeutlichen, dass zwei Transportbehälter in entsprechende Transportaufnahmen der Schweißkabine 1 transportiert werden können. Ist ein Transportbehälter leer, kann die Produktion mit den Blechzuschnitten im zweiten Transportbehälter fortgesetzt werden, während der leere Transportbehälter ausgetauscht wird. Das Gleiche gilt für die zweiten Blechzuschnitte, die gemäß der Pfeile P3 und P4 über weitere Transportbehälter der Schweißkabine 1 zugeführt werden.

Die fertigen Patchwork Blanks werden ebenfalls in dafür vorgesehene Transportbehälter abgelegt. Auch hier ist keine Unterbrechung des Fertigungsprozesses erforderlich, wenn ein Transportbehälter voll ist, da sich immer ein leerer Transportbehälter in einer der dafür vorgesehenen Buchten befindet.

Die zu verschweißenden Blechzuschnitte 2, 3 werden von Handhabungsrobotern HR1 und HR2 auf einem Zentriertisch 4 positioniert. Der Zentriertisch 4 dient dazu, die einzelnen Blechzuschnitte 2, 3 in eine korrekte Position zu bringen und anschließend übereinander zu legen. Auf dem Zentriertisch 4 liegend werden die Blechzuschnitte 2, 3 durch Punktschweißen geheftet und vorfixiert. Dies erfolgt mittels des Schweißroboters WR1.

Nach dem Vorfixieren werden die so miteinander verbundenen Blechzuschnitte 2, 3 mittels des Handhabungsroboters HR2 an ein Schweißkarussell 5 übergeben. Hierbei werden die vorfixierten Blechbauteile 2, 3 von ihrer horizontalen Position in eine im Wesentlichen vertikale Position an Haltern fixiert, auf die später noch eingegangen wird. Das Schweißkarussell 5 besitzt insgesamt sechs Halter. Es wird getaktet um jeweils 60 Grad weiter bewegt. Die Blechzuschnitte 2, 3 werden von dem ersten Schweißroboter WR1 zu drei weiteren Schweißrobotern WR2, WR3, WR4 weiter bewegt und gelangen anschließend zu einer Übergabeposition, an welcher das fertig verschweißte Patchwork Blank 6 von einem Handhabungsroboter HR3 in die dafür vorgesehene Transportbehälter übergeben wird, die abwechselnd in Richtung der Pfeile P5, P6 aus der Schweißkabine 1 entfernt werden können.

Bei diesem Ausführungsbeispiel sind insgesamt vier Schweißroboter WR1 - 4 vorgesehen. Beim Vorfixieren werden nur zwei Schweißpunkte je Patch bzw. Blechzuschnitt 3 zur Vorfixierung hergestellt. Durch die weiteren Schweißroboter WR2, WR3, WR4 werden eine Vielzahl weiterer Schweißpunkte hergestellt. Der Zentriertisch 4 sowie die erste Schweißposition des Schweißkarussells 5 befinden sich im Arbeitsraum des ersten Schweißroboters WR1. Freie Zeit dieses ersten Schweißroboters WR1 wird nach dem Vorfixieren zum Auspunkten, d. h. zur Herstellung weiterer Punktschweißungen am Schweißkarussell 5 genutzt.

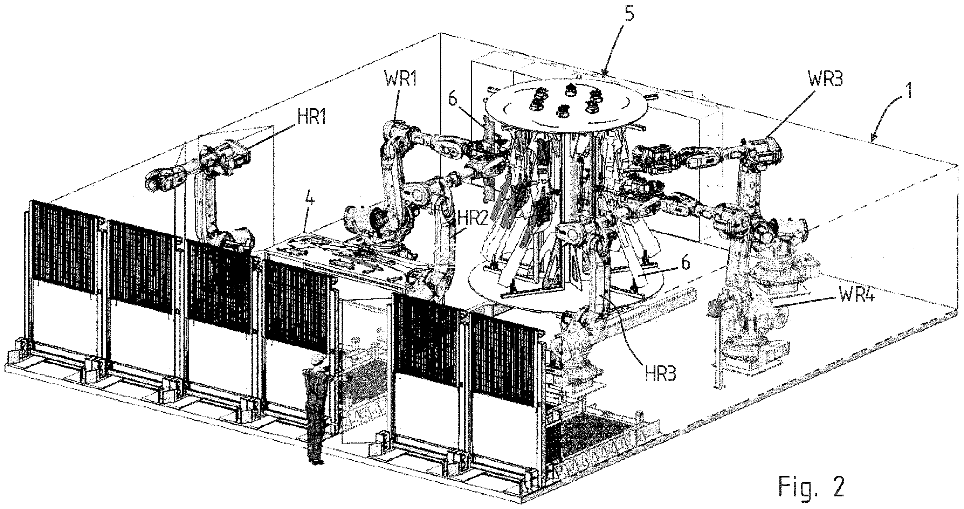

Figur 2 zeigt die Schweißkabine 1 der Figur 1 noch einmal in perspektivischer Darstellung, wobei insbesondere das Schweißkarussell 5 besser zu erkennen ist. Die zu bearbeitenden Blechzuschnitte 2, 3 befinden sich bei diesem sehr kompakten Schweißkarussell 5 in vertikaler Position, wodurch viel horizontaler Bauraum eingespart werden kann, da auch längere Blechzuschnitte 2 während des Verschweißens nur sehr wenig Grundfläche benötigen, anders als beim horizontalen Verschweißen.

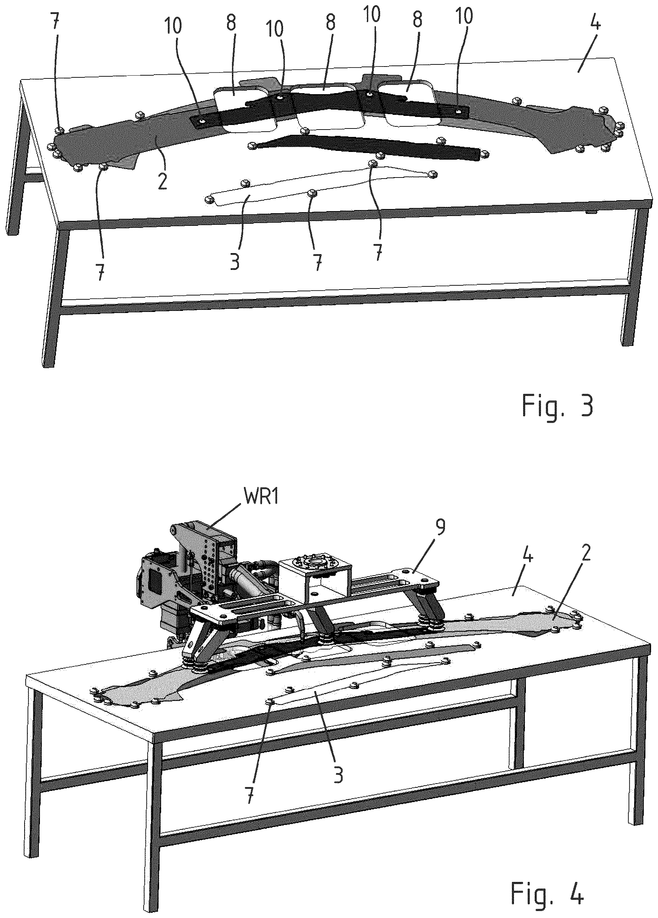

Figur 3 zeigt im Detail den Zentriertisch 4 mit einer Reihe von Zentriervorsprüngen 7, über welche die Blechzuschnitte 2, 3 vor dem Zusammenfügen exakt positioniert werden können. Die Blechzuschnitte 2, 3 werden nacheinander im Bereich der Öffnungen 8 im Zentriertisch 4 übereinander gelegt. Figur 4 zeigt, wie ein Schweißroboter WR1 Punktschweißungen im Bereich der mittleren Öffnung 8 an den dort übereinander liegenden Blechzuschnitten 2, 3 ausführt und somit die Blechzuschnitte 2, 3 vorfixiert. Oberhalb des oberen Blechzuschnittes 2 befindet sich ein Transportwerkzeug 9 des nicht näher dargestellten Handhabungsroboters HR1, welcher den größeren Blechzuschnitt 2 oberhalb des kleineren Blechzuschnittes 3 im Bereich der Öffnungen 8 positioniert.

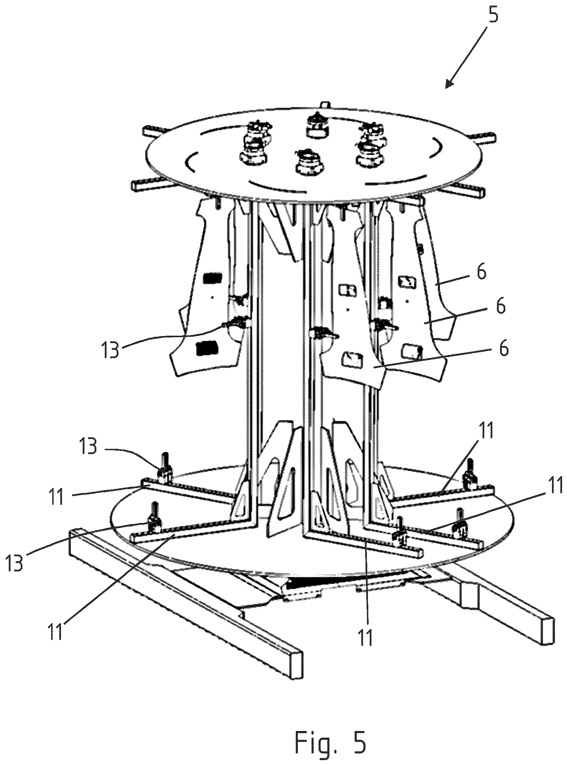

In Figur 3 ist zudem zu erkennen, dass in den Zentriertisch 4 Fixiermittel 10 eingelassen sind. Hierbei kann es sich um Elektromagneten handeln, über welche die Blechzuschnitte 3 gegen den Zentriertisch 4 gezogen werden, um sie während des Verschweißens lagezufixieren. In diesem Fall wird der kleinere Blechzuschnitt 3 durch die Fixiermittel 10 gehalten, anschließend der größere Blechzuschnitt 2 auf den kleineren Blechzuschnitt gelegt und dabei durch die Zentriervorsprünge 7 ausgerichtet. In dieser Position erfolgt das Punktschweißen der beiden Blechzuschnitte 2, 3. Anschließend übergibt der Handhabungsroboter HR1 das so vorfixierte Bauteil an das Schweißkarussell 5, wie es beispielsweise in Figur 5 dargestellt ist. Das Schweißkarussell 5 besitzt eine vertikale Drehachse. Es ist endlos um 360 Grad drehbar. Bei der Darstellung der Figur 5 sind kleinere Patchwork Blanks an einzelnen Haltern 11 angeordnet.

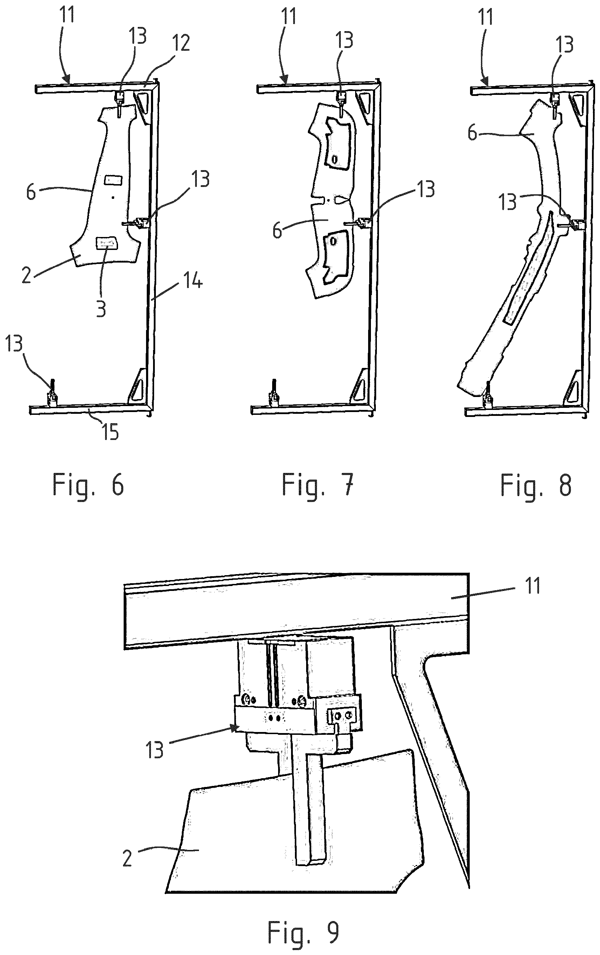

Die Figuren 6 bis 8 zeigen die Halter 11. Die Halter 11 sind bei allen drei Darstellungen identisch. Erfindungsgemäß handelt es sich um einen C-förmigen Rahmenaufbau, der zur radial äußeren Seite des Schweißkarussells 5 hin offen ist. Im Bereich eines oberen Schenkels 12 des Halters 11 befindet sich erfindungsgemäß eine Klemmvorrichtung 13, wie sie in Figur 9 in Vergrößerung dargestellt ist. Weitere Klemmvorrichtungen 13 befinden sich erfindungsgemäß am vertikalen Schenkel 14 und am unteren Schenkel 15. In den Figuren 6 und 7 ist dargestellt, dass es für kleinere Patchwork Blanks 6 ausreichend sein kann, nur die oberen beiden Klemmvorrichtungen 13 zu benutzen, um die zu verschweißenden Blechzuschnitte 2, 3 exakt zu positionieren. Bei den Klemmvorrichtungen 13 handelt es sich um Universalhalter, die dazu ausgebildet sind, die flachen Blechzuschnitte 2 zwischen Klemmbacken klemmend aufzunehmen. Hierzu umgreifen die Klemmenvorrichtungen 13 die Blechzuschnitte 2 am äußeren Rand. Die Klemmvorrichtungen 13 greifen nicht auf die kleineren Blechzuschnitte 3, die auf dem größeren Blechzuschnitt 2 befestigt werden sollen. Die Patches sind über die Vorfixierung auf dem Zentriertisch 2 bereits fixiert worden. Statt mechanischer Klemmvorrichtungen sind auch einseitige Spanneinheiten mit Näherungsmagneten anwendbar.

Figur 8 zeigt ein Ausführungsbeispiel für ein größeres Patchwork Blank, bei welchem alle drei Klemmvorrichtungen 13 zum Einsatz kommen, um das zu fertigende Patchwork Blank zu halten.

Ein wesentlicher Vorteil des erfindungsgemäßen Verfahrens unter Verwendung eines solchen Schweißkarussells 5 ist, dass die Vorgänge des Be- und Entladens der Patchworkblanks 6 bzw. der zu verschweißenden Blechzuschnitte 2, 3 parallel zu den Schweißvorgängen erfolgen können. Durch vertikales Befestigen der Blechzuschnitte 2, 3 beim Schweißen wird erheblicher Bauraum eingespart.

Das erfindungsgemäße Verfahren kann ergänzt werden durch Prüfschritte, wie beispielsweise Messung der Dicke der zu händelnden Bauteile, um auszuschließen, dass versehentlich zwei übereinander liegende Blechplatinen gegriffen worden sind. Auch kann in einem optionalen Schritte eine Kennzeichnung der gefertigten Patchwork Blanks erfolgen mittels einer Kennzeichnungsvorrichtung.

Figur 5 zeigt ferner, dass die einzelnen Halter 11 nicht in jeder Position zwingend nach radial außen weisen müssen in dem Sinne, dass sie sich exakt radial erstrecken. Die Halter 11 sind selbst noch einmal um ihre eigene Hochachse schwenkbar an dem Schweißkarussell 5 gelagert, was das Be- und Entladen erleichtert. Gemäß dem Grundprinzip befindet sich das Schweißkarussell in der Mitte einer sternförmigen Anordnung von Handhabungsrobotern HR2 zum Beladen bzw. zum Entladen (Handhabungsroboter HR3) und Schweißrobotern WR1-4.

In einer Weiterbildung der Erfindung kann vorgesehen sein, dass der Zentriertisch 4 in gewissem Umfang schwenkbar gelagert ist, um das Positionieren der einzelnen Blechzuschnitte 2, 3 zu vereinfachen bzw. die Handhabung während des Verschweißens zu optimieren.

Je nachdem, wieviel unterschiedliche Blechzuschnitte bzw. Patchworkblanks mit dem Schweißkarussell hergestellt werden sollen, können auch mehr als 3 oder 4 universale Klemmvorrichtungen an dem Halter 11 des Schweißkarussells angeordnet sein. Dadurch wird die Variabilität weiter verbessert. Selbstverständlich ist es möglich, auch die Werkzeuge zum Greifen der Blechzuschnitte so zu gestalten, dass unterschiedliche Blechzuschnitte gegriffen werden können. Hierzu können verstellbare Greifer an den Handhabungsrobotern befestigt sein.

### Bezugszeichen:

- 1 -: Schweißkabine
- 2 -: Blechzuschnitt
- 3 -: Blechzuschnitt
- 4 -: Zentriertisch
- 5 -: Schweißkarussell
- 6 -: Patchworkblank
- 7 -: Zentriervorsprung
- 8 -: Öffnung
- 9 -: Transportwerkzeug
- 10 -: Fixiermittel
- 11 -: Halter
- 12 -: Schenkel
- 13 -: Klemmvorrichtung
- 14 -: Schenkel
- 15 -: Schenkel

- P1 -: Pfeil
- P2 -: Pfeil
- P3 -: Pfeil
- P4 -: Pfeil
- P5 -: Pfeil
- P6 -: Pfeil
- HR1 -: Handhabungsroboter 1
- HR2 -: Handhabungsroboter 2
- HR3 -: Handhabungsroboter 3
- WR1 -: Schweißroboter 1
- WR2 -: Schweißroboter 2
- WR3 -: Schweißroboter 3
- WR4 -: Schweißroboter 4

## Patentansprüche

1. Verfahren zum Verschweißen von Blechzuschnitten zu Patchwork Blanks mit folgenden Schritten:
- Bereitstellen der zu verschweißenden Blechzuschnitte (2, 3) zur Handhabung mittels Handhabungsrobotern (HR1, HR2);
- Die Handhabungsroboter (HR1, HR2) platzieren einen ersten Blechzuschnitt (2) und wenigstens einen weiteren Blechzuschnitt (3) in einer ausgerichteten Position auf dem ersten Blechzuschnitt (2), wobei die Handhabungsroboter (HR1, HR2) den ersten Blechzuschnitt (2) auf einem Zentriertisch (4) in einer Zentrierposition positionieren, wo er mit dem wenigstens einen weiteren Blechzuschnitt (3) vorfixiert wird;
- Der wenigstens ein weitere Blechzuschnitt (3) wird mit dem ersten Blechzuschnitt (2) durch Punktschweißen mittels eines ersten Schweißroboters (WR1) vorfixiert;
- Die vorfixierten Blechzuschnitte (2, 3) werden mittels eines Handhabungsroboters (HR2) an ein Schweißkarussell (5) übergeben und dort in im wesentlichen vertikaler Position an einem Halter (11) fixiert, der einen C-förmigen Rahmenaufbau aufweist und zur radial äußeren Seite des Schweißkarussells hin offen ist, wobei an dem Halter (11) mehrere universale Klemmvorrichtungen (13) für flache Blechzuschnitte (2, 3) angeordnet sind, wobei die Klemmvorrichtungen (13) die Blechzuschnitte (2, 3) an einem Randbereich umgreifen, wobei die Klemmvorrichtungen (13) an einem oberen Schenkel (12), an einem unteren Schenkel (15) und an einem vertikalen Schenkel (14) des Halters (11) angeordnet sind;
- Das Schweißkarussell (5) führt die vorfixierten Blechzuschnitte (2, 3) an mehreren Schweißrobotern (WR1, WR2, WR3, WR4) vorbei, um weitere Punktschweißungen auszuführen, wobei ein Be- und Entladen des Schweißkarussells (5) parallel zum Schweißprozess ausgeführt wird;
- Abschließend erreicht das fertige Patchwork Blank (6) eine Übergabeposition des Schweißkarussells (5), wo es von einem Handhabungsroboter (HR3) entnommen wird.

2. Verfahren nach Anspruch 1, **dadurch gekennzeichnet, dass** die Blechzuschnitte (2, 3) zur Zentrierung auf dem Zentriertisch (4) mittels Fixiermitteln (10) fixiert werden.

3. Verfahren nach Anspruch 2, **dadurch gekennzeichnet, dass** die Blechzuschnitte (2, 3) magnetisch auf dem Zentriertisch (4) fixiert werden.

4. Verfahren nach einem der Ansprüche 1 bis 3, **dadurch gekennzeichnet, dass** die Handhabungsroboter (HR1, HR2) zur Positionierung der Blechzuschnitte (2, 3) die Blechzuschnitte (2, 3) in horizontaler Lage auf dem Zentriertisch (4) ablegen.

5. Verfahren nach einem der Ansprüche 1 bis 4, **dadurch gekennzeichnet, dass** die Halter (11) dazu ausgebildet sind, mehrere unterschiedliche Formen von Blechzuschnitten (2, 3) aufzunehmen.

6. Verfahren nach einem der Ansprüche 1 bis 5, **dadurch gekennzeichnet, dass** das Scheißkarussell (5) von einer Bearbeitungsposition zur nächsten Bearbeitungsposition getaktet weiterbewegt wird.

7. Verfahren nach Anspruch 6, **dadurch gekennzeichnet, dass** das Schweißkarussell (5) in 60°-Schritten getaktet weiterbewegt wird.

## Claims

1. Method for welding sheet metal sections into patchwork blanks having the following steps:
- providing the sheet metal sections (2, 3) to be welded together for handling by means of handling robots (HR1, HR2);
- the handling robots (HR1, HR2) place a first sheet metal section (2) and at least one further sheet metal section (3) in an aligned position on the first sheet metal section (2), wherein the handling robots (HR1, HR2) position the first sheet metal section (2) on a centring table (4) in a centring position where it is prefixed to the at least one further sheet metal section (3);
- the at least one further sheet metal section (3) is prefixed to the first sheet metal section (2) by spot welding using a first welding robot (WR1);
- the prefixed sheet metal sections (2, 3) are transferred by means of a handling robot (HR2) to a welding carousel (5), where they are fixed in a substantially vertical position onto a holder (11) which has a C-shaped frame structure and is open towards the radially outer side of the welding carousel,
wherein a plurality of universal clamping devices (13) for flat sheet metal sections (2, 3) are arranged on the holder (11),
wherein the clamping devices (13) engage around the sheet metal sections (2, 3) at an edge region, wherein the clamping devices (13) are arranged on an upper leg (12), on a lower leg (15) and on a vertical leg (14) of the holder (11);
- the welding carousel (5) guides the prefixed sheet metal sections (2, 3) past a plurality of welding robots (WR1, WR2, WR3, WR4), in order to carry out further spot welds, wherein loading and unloading the welding carousel (5) is carried out parallel to the welding process;
- lastly, the finished patchwork blank (6) reaches a transfer position of the welding carousel (5) where it is removed by a handling robot (HR3).

2. Method according to claim 1, **characterised in that** the sheet metal sections (2, 3) are fixed for centring on the centring table (4) with the aid of fixing means (10).

3. Method according to claim 2, **characterised in that** the sheet metal sections (2, 3) are fixed magnetically onto the centring table (4).

4. Method according to any of claims 1 to 3, **characterised in that** the handling robots (HR1, HR2) for positioning the sheet metal sections (2, 3) deposit the sheet metal sections (2, 3) in a horizontal position on the centring table (4).

5. Method according to any of claims 1 to 4, **characterised in that** the holders (11) are configured to receive a plurality of different shapes of sheet metal sections (2, 3).

6. Method according to any of claims 1 to 5, **characterised in that** the welding carousel (5) is moved on in a clocked manner from one processing position to the next processing position.

7. Method according to claim 6, **characterised in that** the welding carousel (5) is moved on in a clocked manner in steps of 60°.

## Revendications

1. Procédé de soudage de découpes de tôle à des ébauches de patchwork comprenant les étapes suivantes :
- Fourniture des découpes de tôle (2, 3) à souder pour la manipulation au moyen de robots manipulateurs (HR1, HR2) ;
- Les robots manipulateurs (HR1, HR2) placent une première découpe de tôle (2) et au moins une autre découpe de tôle (3) dans une position orientée vers la première découpe de tôle (2), dans lesquels les robots manipulateurs (HR1, HR2) positionnent la première découpe de tôle (2) sur une table de centrage (4) dans une position de centrage, où elle est préfixée à l'au moins une autre découpe de tôle (3) ;
- L'au moins une autre découpe de tôle (3) est préfixée à la première découpe de tôle (2) par un soudage par points au moyen d'un premier robot de soudage (WR1) ;
- Les découpes en tôle (2, 3) préfixés ont été transférées au moyen d'un robot manipulateur (HR2) sur un carrousel de soudage (5) et fixées à cet endroit sur un support (11) selon une position sensiblement verticale, qui présente une structure de cadre en forme de C et qui est ouvert sur le côté radialement extérieur du carrousel de soudage,
dans lequel plusieurs dispositifs de serrage (13) universels sont disposés sur le support (11) pour une découpe de tôle (2, 3) plate,
dans lequel les dispositifs de serrage (13) entourent les découpes de tôle (2, 3) sur une zone périphérique, dans lesquels les dispositifs de serrage (13) sont disposés sur une branche supérieure (12), sur une branche inférieure (15) et sur une branche verticale (14) du support (11) ;
- Le carrousel de soudage (5) fait passer les découpes en tôle (2, 3) préfixées devant plusieurs robots de soudage (WR1, WR2, WR3, WR4), pour la réalisation d'autres soudures par points, dans lequel un chargement et déchargement du carrousel de soudage (5) est effectué parallèlement au processus de soudage ;
- Pour finir, l'ébauche de patchwork (6) fini atteint une position de transfert du carrousel de soudage (5), où il est prélevé par un robot manipulateur (HR3).

2. Procédé selon la revendication 1, **caractérisé en ce que** les découpes de tôle (2, 3) sont fixées pour le centrage sur la table de centrage (4) au moyen de moyens de fixation (10).

3. Procédé selon la revendication 2, **caractérisé en ce que** les découpes de tôle (2, 3) sont fixées magnétiquement sur la table de centrage (4).

4. Procédé selon l'une quelconque des revendications 1 à 3, **caractérisé en ce que** les robots manipulateurs (HR1, HR2) déposent les découpes de tôle (2, 3) en position horizontale sur la table de centrage (4) pour le positionnement des découpes de tôle (2, 3).

5. Procédé selon l'une quelconque des revendications 1 à 4, **caractérisé en ce que** les supports (11) sont conçus de manière à recevoir plusieurs formes différentes de découpes de tôle (2, 3).

6. Procédé selon l'une quelconque des revendications 1 à 5, **caractérisé en ce que** le carrousel de soudage (5) est avancé de manière cadencée d'une position de travail à la position de travail suivante.

7. Procédé selon la revendication 6, **caractérisé en ce que** le carrousel de soudage (5) est avancé de manière cadencée par incrément de 60°.
